# EUROPEAN PATENT SPECIFICATION

(11) **EP 2 921 890 B1**
(45) Date of publication and mention of the grant of the patent: **24.10.2018**
(21) Application number: 13855828.3
(22) Date of filing: 11.11.2013
(51) Int. Cl.: G02B 6/38

(54) **HOUSING CONNECTION STRUCTURE**
GEHÄUSEVERBINDUNGSSTRUKTUR
STRUCTURE DE CONNEXION DE LOGEMENT

(30) Priority: 16.11.2012 JP 2012252417
(43) Date of publication of application: 23.09.2015
(73) Proprietor: Yazaki Corporation, Minato-ku Tokyo 108-8333 (JP)
(72) Inventor: IKEDA Yukiyoshi, Susono-shi Shizuoka 410-1194 (JP)
(74) Representative: Grünecker Patent- und Rechtsanwälte PartG mbB
(86) International application number: PCT/JP2013/080459
(87) International publication number: WO 2014/077222

(56) References cited:
- JP-A- H11 281 850
- JP-A- 2005 025 181
- US-A- 6 123 579
- US-A1- 2004 253 869
- US-A1- 2009 232 455

## Description

### Technical Field

The present invention relates to a housing connection structure.

### Background Art

Figs. 10 and 11 illustrate a housing connection structure disclosed in Patent Document 1 identified below. This housing connection structure is configured such that a front portion 121 of a ferrule housing 120 accommodating and supporting a plurality of ferrules 110 is detachably coupled to a housing receiving portion 131 of a connector 130.

Terminals of optical fiber cables 101 are connected to the respective ferrules 110 accommodated in the ferrule housing 120.

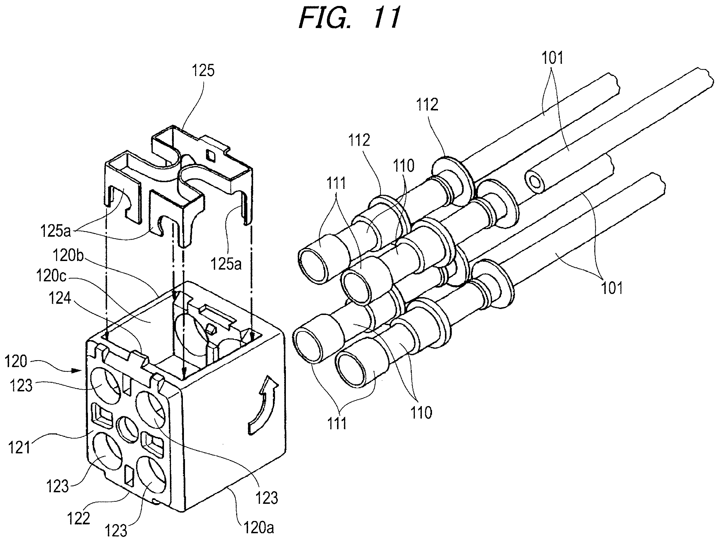

As shown in Fig. 11, the ferrule housing 120 has four ferrule receiving holes 123 to accommodate four ferrules 110. Each ferrule 110 is inserted into the corresponding ferrule receiving hole 123 such that its distal end 111 protrudes from a distal end surface of the housing. The ferrule 110 is equipped with a pair of flange parts 112 spaced from each other in a longitudinal direction.

As shown in Fig. 11, the ferrules 110 inserted into the respective ferrule receiving holes 123 are positioned by ferrule urging springs 125 installed inside the ferrule housing 120 such that the distal ends 111 protrude from the distal end surface of the housing. Each pair of flange pressing tongues 125a of the ferrule urging springs 125 abuts on inner surfaces of the pair of flange parts 112 of the corresponding ferrule 110, thereby positioning the ferrule 110 and at the same time urging the ferrule 110 in a direction protruding out from the distal end surface of the housing.

The connector 130 is, for example, a connector to be mounted on a circuit board and inside which optical circuit terminals to be connected to the ferrules 110 are provided.

In this ferrule housing 120, in order to ensure alignment of the ferrules 110, a lap design (a design that provides interference fit) is partially employed, for example, at a portion to be fitted to the connector 130, which produces large friction force at the time of attachment to the connector 130 and detachment from the connector 130. Hence, in order to improve the attachment and detachment operations by reducing the force required for the operations, a pivot type connection structure using the principle of leverage is used.

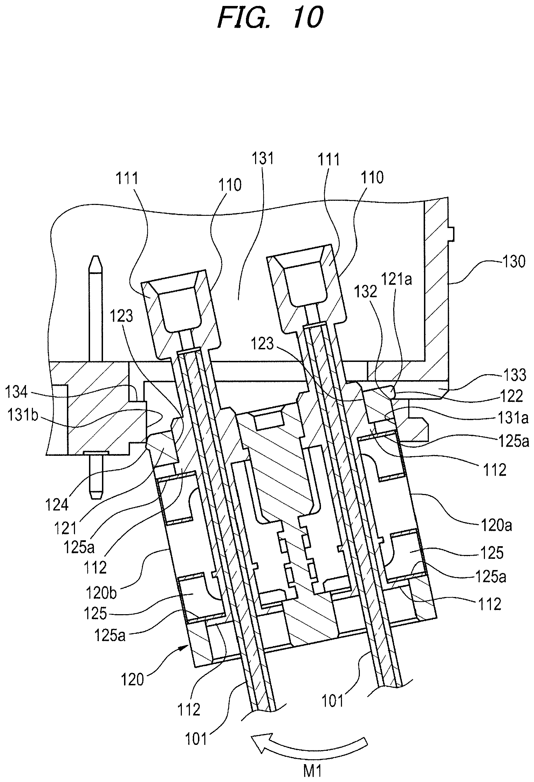

In the case of Patent Document 1, the ferrule housing 120 includes a fulcrum engagement protrusion 122 provided at a front portion 121a of one outer side surface 120a (the outer side surface on the right side in Fig. 10), and a connector engaging protrusion 124 provided on an opposite outer side surface 120b on the side opposite to the one outer side surface 120a for locking.

The fulcrum engagement protrusion 122 is a protrusion that engages with a fulcrum portion of the connector 130 which will be described below in a pivotable manner. This protrusion 122 is provided to protrude in an outward direction perpendicular to the one outer side surface 120a.

As shown in Fig. 11, the side of the opposite outer side surface 120b has a structure with a large opening 120c for attaching the ferrule urging spring 125. Therefore, there is no space to provide a flexible arm or the like to support the connector engaging protrusion 124 in a displaceable manner. Accordingly, as shown in Fig. 11, the connector engaging protrusion 124 for the locking is rigidly (inflexibly) provided in a protruded manner at the distal end portion of the opposite outer side surface 120b.

The housing receiving portion 131 has a fulcrum corner portion 132 on one inner side surface 131a that faces the one outer side surface 120a of the ferrule housing 120 and a housing locking portion 134 on the opposite inner side surface 131b that faces the opposite outer side surface 120b of the ferrule housing 120.

The fulcrum corner portion 132 is an angled portion that supports the base part of the fulcrum engagement protrusion 122 in a pivotable manner. The one inner side surface 131a of the housing receiving portion 131 is configured as as an inclined surface to widen a clearance so as to allow the pivoting of the ferrule housing 120. Accordingly, the fulcrum corner portion 132 is configured as an angled portion with an acute angle of less than 90°.

The back side of the fulcrum corner portion 132 is configured as a hollow portion 133 to which the fulcrum engagement protrusion 122 is loosely fitted.

The housing locking portion 134 is configured as a step portion formed in a recessed manner from the opposite inner side surface 131b to allow the engagement of the connector engaging protrusion 124.

According to the housing connection structure of Patent Document 1, as shown in Fig. 10, from a state in which the fulcrum engagement protrusion 122 of the ferrule housing 120 is engaged with the fulcrum corner portion 132 in a pivotable manner as shown in Fig. 10, the ferrule housing 120 is pivoted in the direction M1 shown in Fig. 10 about the fulcrum corner portion 132 serving as a pivot point and the connector engaging protrusion 124 is engaged with the housing locking portion 134, whereby the connection is completed.

When releasing from the connection, the ferrule housing 120 is pivoted in a direction opposite to the direction M1 shown in Fig. 10, so that the connector engaging protrusion 124 is disengaged from the housing locking portion 134.

### Prior Art Document

### Patent Document

Patent Document 1: JP 2005-25181 A
Document US 2004/0253869 A1 is a family member of Patent Document 1 and relates to a structure of a removable electrical connector to be attached and removed easily without being damaged, a structure of the removable electrical connector according to this invention has a receiving part, a pivoting part, an engagin and disengaging part, and a rotation allowing part. The removable electrical connector is pivoted around a first edge of the connector housing of the pivoting part. A second edge opposed to the first edge of the removable electrical connector of the engaging and disengaging part is engaged with and disengaged from the receiving part of a mating connector or a mating equipment. The rotation allowing part allows the removable electrical connector to rotate around the pivoting part. US 2004/0253869 A1 does not disclose a lock arm (26) having not only a flexible arm (261) but also a connector engaging portion (262) provided on a distal side outer surface of the flexible arm (261) and being a recess, wherein the recess of the connector engaging portion (262) connects to a protrusion of a housing locking portion (36).

### Summary of Invention

### Problem to be Solved by Invention

However, according to the housing connection structure of Patent Document 1, because the connector engaging protrusion 124 has poor flexibility, considerably high load is applied to the connector engaging protrusion 124 and the fulcrum corner portion 132 at the time of attaching or detaching the ferrule housing 120 with respect to the housing receiving portion 131. As a result, repeating the attachment and detachment of the ferrule housing 120 may cause wear at the connector engaging protrusion 124 or at the fulcrum corner portion 132. And, the wear at the connector engaging protrusion 124 or at the fulcrum corner portion 132 may deteriorate the coupling strength between the ferrule housing 120 and the housing receiving portion 131 or the alignment of the ferrules 110.

Hence, it is an object of the present invention to solve the problem described above, and to provide a housing connection structure that can prevent deterioration of coupling strength between a ferrule housing and a housing receiving portion of a connector or an alignment of ferrules, even after repeating pivoting operations for attaching and detaching the ferrule housing with respect to the housing receiving portion.

### Means for Solving the Problem

The above object of the present invention is achieved by the subject matter of claim 1.

In a further embodiment (2), a chamfer may be provided on at least distal end portions of the opposite outer side surface and the flexible arm or a corner portion at a distal end of the opposite inner side surface to avoid an interfering contact during pivoting of the ferrule housing.

In a further embodiment (3), a transverse cross-section of the flexible arm may have a substantially triangular shape, one side of the triangular shape being parallel to the opposite outer side surface, and two sides of the triangular shape extending from both ends of the one side toward an inside of the ferrule housing meet at an intermediate position between two adjacent ferrule receiving holes inside the ferrule housing.

In a further embodiment (4) with the housing connection structure accoding to (3) the adjacently arranged ferrule receiving holes between which the flexible arm is interposed may further have different inner diameters, and the flexible arm is provided eccentrically toward a side of the ferrule receiving hole having a smaller diameter.

The ferrule urging spring for urging the ferrules in the direction protruding from the distal end surface of the housing of the ferrule housing is attached to the base end portion of the ferrule housing, so that the opposite outer side surface of the ferrule housing can be equipped with the lock arm having the connector engaging portion in the distal side outer surface of the flexible arm extending in the direction from the base end side of the ferrule housing toward the distal end side of the ferrule housing.

The pivot point at the time of attaching or detaching the ferrule housing with respect to the housing receiving portion is on the chamfered portion formed by chamfering the corner portion at the distal end of the one inner side surface of the housing receiving portion, and a slide region of the one outer side surface of the ferrule housing is formed in a smooth curved surface or an angled portion having a large angle of 90° or more, so that stress concentration relieved at the location of the pivot point.

Further, the distal end portion of the ferrule housing is coupled to the housing receiving portion such that, from a state in which the one outer side surface of the ferrule housing is in contact with the chamfered pivot portion of the housing receiving portion in an inclined manner, the ferrule housing is pivoted about the chamfered pivot portion serving as a fulcrum so that the one outer side surface overlies the one inner side surface, the engaging protrusion of the one outer side surface of the ferrule housing is engaged with the engaging recess of the one inner side surface of the housing receiving portion, and the connector engaging portion of the opposite outer side surface of the ferrule housing is locked at the housing locking portion on the opposite inner side surface of the housing receiving portion. At the time of this coupling, the connector engaging portion of the ferrule housing engaged with the housing locking portion of the housing receiving portion is installed in the distal end of the flexible arm constructing the lock arm described above, and flexible displacement of the flexible arm can avoid an excessive load acting at the time of the coupling.

Also, when the ferrule housing coupled to the housing receiving portion is detached from the housing receiving portion, the ferrule housing is turned and operated in the direction opposite to that at the time of coupling, and also in that case, flexible displacement of the flexible arm of the lock arm can reduce a load acting on a slide part.

That is, the load acting on the mutual slide parts can be reduced at the time of operation of attachment and detachment of the ferrule housing to and from the housing receiving portion. As a result, even in the case of repeating pivoting operation of the ferrule housing attached to and detached from the housing receiving portion of the connector, wear of the portion sliding at the time of the turning operation is prevented, and a deterioration of alignment of the ferrules and a deterioration of coupling strength between the ferrule housing and the housing receiving portion are prevented.

According to the housing connection structure having the configuration of (2) described above, the chamfer is formed on at least the distal end portions of the opposite outer side surface and the flexible arm of the ferrule housing or the corner portion at the distal end of the opposite inner side surface to avoid an interfering contact during pivoting of the ferrule housing. As a result, during the pivoting operation of the ferrule housing, there is no sudden increase in force required for the operation due to, for example, a contact between the distal end portion of the opposite outer side surface of the ferrule housing and the corner portion at the distal end of the opposite inner side surface, so that the ferrule housing can be attached and detached with stable operation force, and the attachment and detachment operations of the ferrule housing are improved accordingly.

According to the housing connection structure having the configuration of (3) described above, the transverse cross-section of the flexible arm of the lock arm has a shape similar to a substantially triangular transverse cross-sectional region surrounded by the opposite outer side surface and outer peripheral surfaces of the two adjacent ferrule receiving holes, and as compared with, for example, a case in which the transverse cross-section of the flexible arm has a rectangular shape, a dimension in a direction of flexural displacement is large so that higher spring strength can be provided. Also, because the region between the two adjacent ferrule receiving holes is effectively utilized as a region for arranging of the lock arm, the lock arm is prevented from outwardly protruding from the opposite outer side surface, and the external dimension between the one outer side surface and the opposite outer side surface of the ferrule housing can be reduced.

According to the housing connection structure having the configuration of (4) described above, the adjacently arranged ferrule receiving holes between which the flexible arm is interposed have different inner diameters, so that wrong assembly of the ferrules can be prevented. Further, the flexible arm is arranged eccentrically toward the side of the ferrule receiving hole having a smaller diameter, so that distances between the flexible arm and the respective ferrule receiving holes can be equalized, and variations in coupling strength between the ferrules due to a difference in the distances to the flexible arm can be prevented.

The present invention has been briefly described above. Details of the present invention will be further apparent by reading through a mode for carrying out the invention (hereinafter "embodiment") described below with reference to the accompanying drawings.

### Brief Description of Drawings

Fig. 1 is a sectional view of a housing connection structure according to an embodiment of the present invention, illustrating a state in which a ferrule housing is started to be attached to a housing receiving portion of a connector.
Fig. 2 is a perspective view seen from the distal end surface side of the connector shown in Fig. 1.

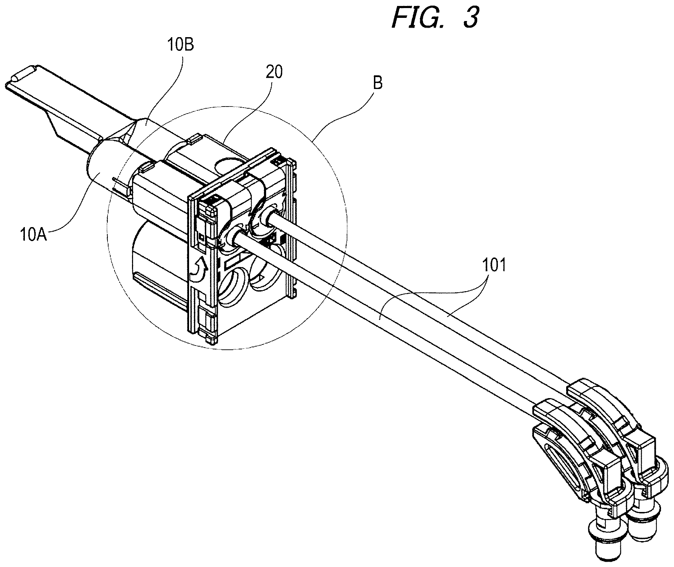

Fig. 3 is a perspective view of an optical fiber cable and the ferrule housing shown in Fig. 1.
Fig. 4 is an enlarged view of part B of Fig. 3.
Fig. 5 is a perspective view seen from the oblique upward side of the distal end side of the ferrule housing shown in Fig. 1.
Fig. 6 is a front view of the ferrule housing shown in Fig. 5.
Fig. 7 is a sectional view taken on line C-C of Fig. 6.
Fig. 8 is a view seen from arrow D of Fig. 7.
Fig. 9 is a perspective view of a ferrule urging spring shown in Fig. 1.
Fig. 10 is a longitudinal sectional view showing a conventional housing connection structure, not part of the present invention.
Fig. 11 is an exploded perspective view showing a positioning structure of a ferrule in a ferrule housing shown in Fig. 10.

### Embodiments of Invention

Hereinafter, a preferred embodiment of a housing connection structure according to the present invention will be described in detail with reference to the drawings.

The housing connection structure according to this embodiment is a structure in which the distal end portion 21 of a ferrule housing 20 for accommodating and supporting a plurality of ferrules 10A, 10B is detachably coupled to a housing receiving portion 31 installed in a connector 30.

The terminal of an optical fiber cable 101 is connected to each of the ferrules 10A, 10B accommodated in the ferrule housing 20.

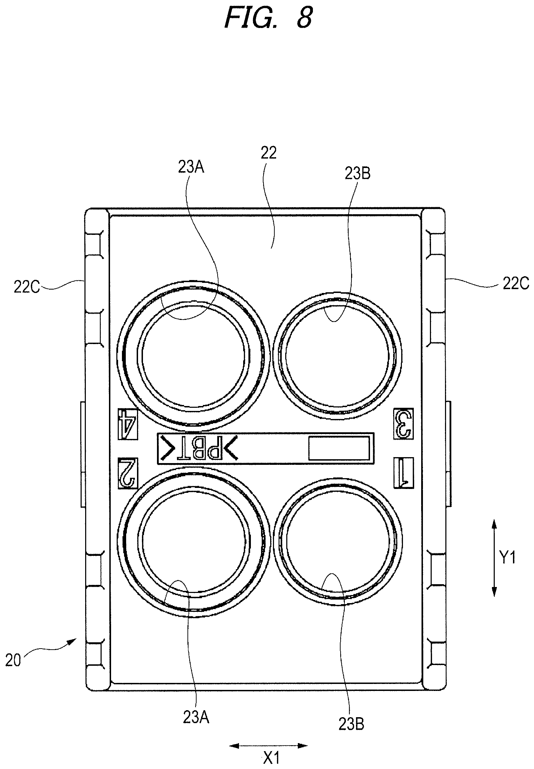

In the ferrule housing 20, as shown in Fig. 8, two ferrule receiving holes 23A, 23B with different inner diameters are adjacently arranged in a width direction (direction X1 of Fig. 8) of the ferrule housing 20. Also, arrangement of the two ferrule receiving holes 23A, 23B is formed in two steps in a height direction (direction Y1 of Fig. 8) of the ferrule housing 20. That is, the ferrule housing 20 has a total of four ferrule receiving holes and accommodates the four ferrules.

The ferrule receiving hole 23A is a hole for accommodating the large-diameter ferrule 10A. Also, the ferrule receiving hole 23B is a hole set in a inner diameter smaller than that of the ferrule receiving hole 23A, and accommodates the small-diameter ferrule 10B.

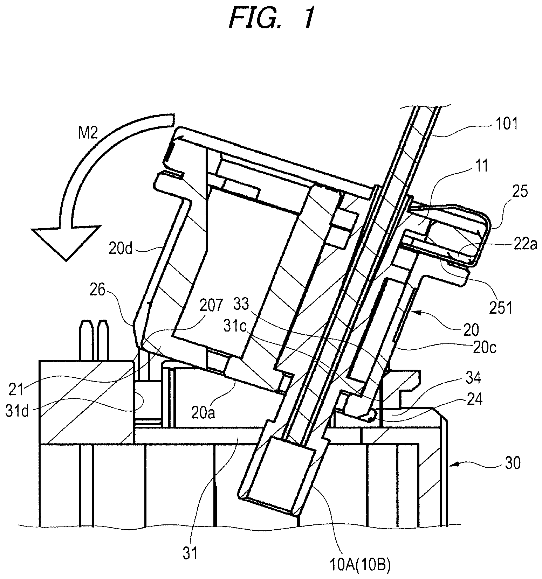

As shown in Fig. 1, the plural ferrules 10A, 10B are accommodated in the ferrule housing 20 such that the distal ends of the ferrules 10A, 10B protrude from a distal end surface 20a of the housing.

The ferrule housing 20 of the embodiment includes, as shown in Fig. 1, an engaging protrusion 24 provided to protrude from one outer side surface 20c of the housing, a ferrule urging spring 25 configured to urge the accommodated ferrules 10A, 10B, and a lock arm 26 formed on an opposite outer side surface 20d of the housing.

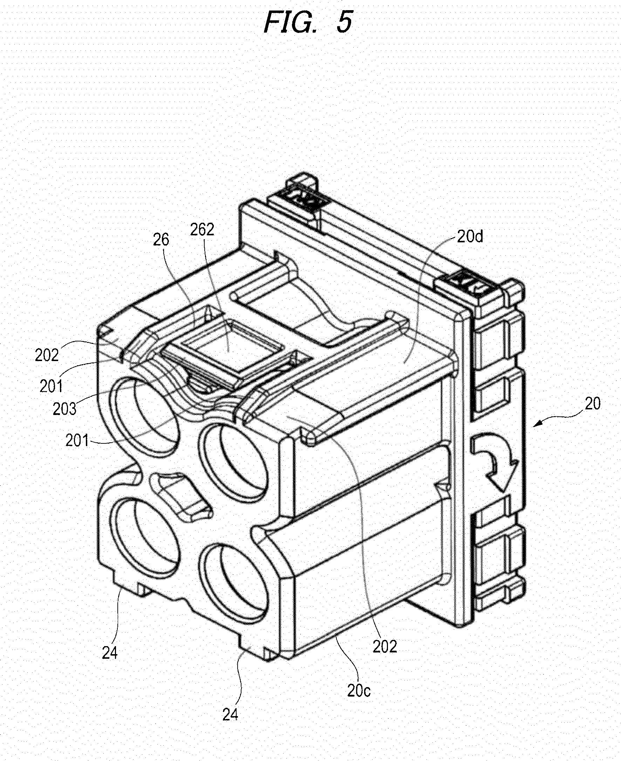

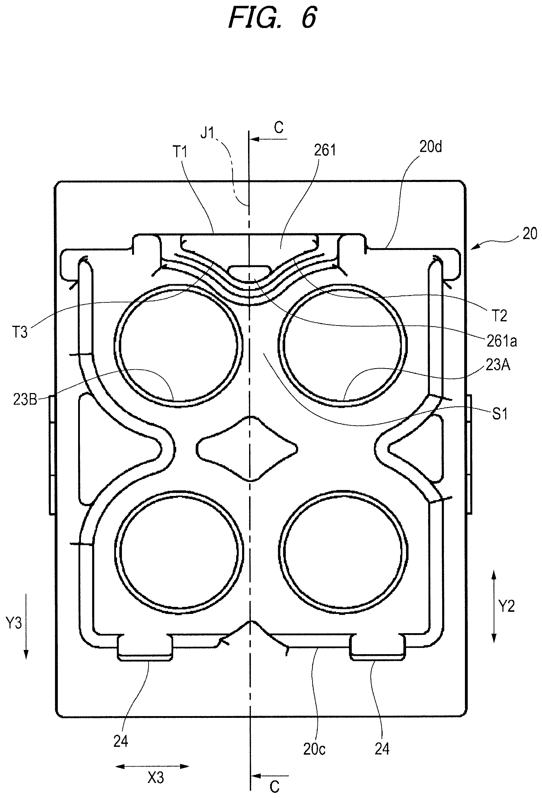

As shown in Figs. 5 and 6, the one outer side surface 20c of the ferrule housing 20 is one of the pair of outer side surfaces in a height direction (direction Y2 in Fig. 6) of the ferrule housing 20. The opposite outer side surface 20d is the outer side surface on the side opposite to the one outer side surface 20c.

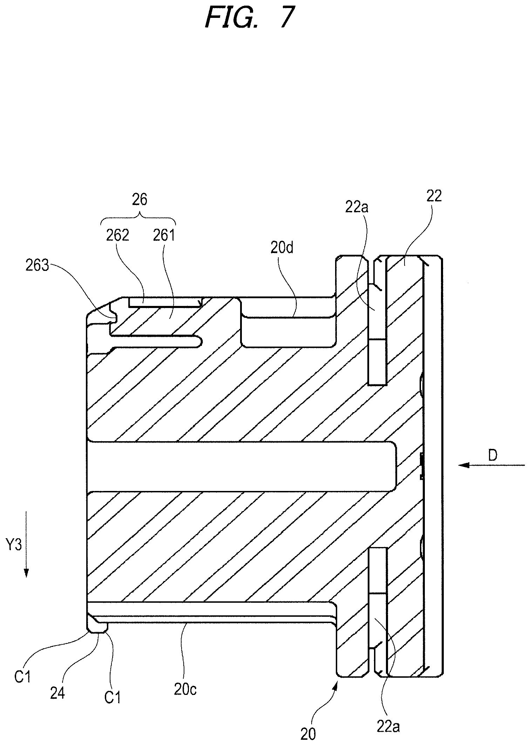

As shown in Figs. 6 and 7, the engaging protrusion 24 is provided to protrude in an outward direction (direction Y3 in Fig. 6) perpendicular to the one outer side surface 20c from the distal end portion of the one outer side surface 20c. According to the embodiment, the engaging protrusions 24 are installed in two places separated in a width direction (direction X3 of Fig. 6) of the ferrule housing 20 in the distal end portion of the one outer side surface 20c. According to the embodiment, as shown in Fig. 7, a chamfer C1 is formed on a corner portion of the distal end of the engaging protrusion 24.

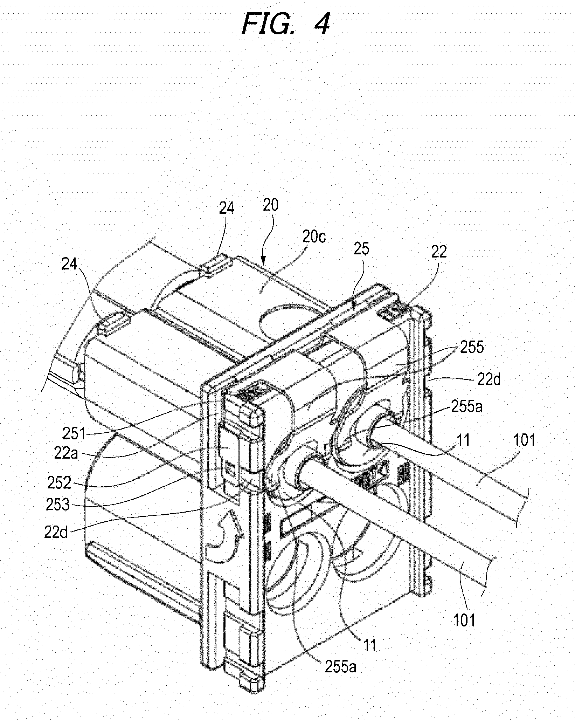

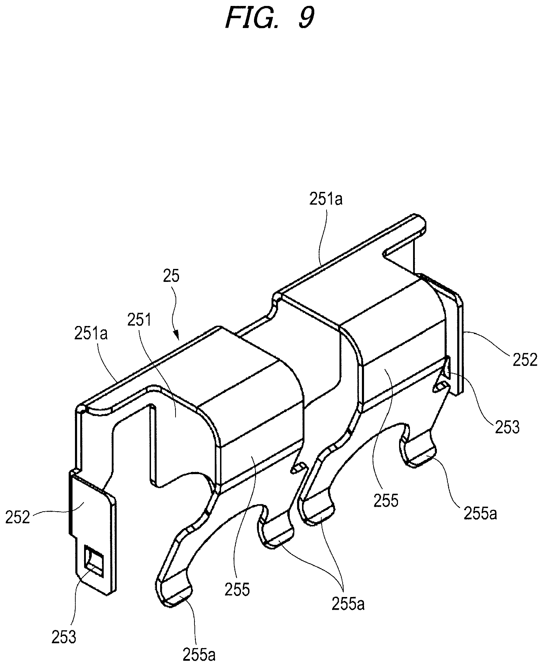

The ferrule urging spring 25 is a press molded product of a metal plate, and includes an insertion plate part 251 inserted into a spring mounting groove 22a (see Fig. 7) of the base end portion 22 of the ferrule housing 20, pinching plate parts 252 which are folded and formed in both side edges of the insertion plate part 251 and pinch both outer side surfaces 22c (see Fig. 8) of the base end portion 22, engaging protrusions 253 raised and formed on the pinching plate parts 252 so as to engage with locking grooves 22d (see Fig. 4) on both outer side surfaces 22c of the base end portion 22, and a pair of leaf spring parts 255 extending out of upper end edges 251a of the insertion plate part 251 as shown in Fig. 9.

The ferrule urging spring 25 is fixed to the base end portion 22 of the ferrule housing 20 by inserting the insertion plate part 251 into the spring mounting groove 22a and engaging the engaging protrusions 253 with the locking grooves 22d of both sides of the base end portion 22 as shown in Fig. 4.

In a state in which the ferrule urging spring 25 is fixed to the base end portion 22, the distal ends 255a of the leaf spring parts 255 of the ferrule urging spring 25 press flange parts 11 of the back ends of the ferrules 10A, 10B and urge the ferrules 10A, 10B in a direction protruding from the distal end surface 20a of the housing as shown in Figs. 1 and 4.

The lock arm 26 is provided on the opposite outer side surface 20d on the side opposite to the one outer side surface 20c of the ferrule housing 20 described above. As shown in Fig. 7, the lock arm 26 has a flexible arm 261 extending in the direction from the base end side of the ferrule housing 20 toward the distal end side of the ferrule housing 20, and a connector engaging portion 262 formed on a distal side outer surface of the flexible arm 261. According to the present invention, the connector engaging portion 262 is a recess. The connector engaging portion 262 is formed in the recess rather than a protrusion structure and thereby, a dimension of the ferrule housing 20 in a height direction can be reduced to decrease the height of the ferrule housing 20.

The connector engaging portion 262 of the lock arm 26 is displaced so as to sink inside the opposite outer side surface 20d with flexural deformation in a direction (direction Y3 of Fig. 7) perpendicular to an extension direction of the flexible arm 261. A distal end surface of the flexible arm 261 is provided with a release jig engaging groove 263 as shown in Fig. 7. This release jig engaging groove 263 is a groove for connecting an unlocking jig (not shown). The unlocking jig (not shown) is a jig used in the case of unlocking a lock state in which the lock arm 26 is engaged with a housing locking portion of the housing receiving portion 31 described below.

According to the embodiment, as shown in Fig. 5, chamfers 201, 202, 203 are formed on the distal end of the flexible arm 261 and the distal end of the opposite outer side surface 20d. The chamfers 201, 202, 203 are formed to avoid contacting, for example, the edge part of the housing receiving portion 31 during the pivoting operation of the ferrule housing 20 which will be described below. These chamfers 201, 202, 203 may be formed on any of an inclined surface and a curved surface.

Further, according to the embodiment, as shown in Fig. 6, a transverse cross-section of the flexible arm 261 has a substantially triangular shape. More specifically, the flexible arm 261 has a triangular shape having one side T1 being parallel to the opposite outer side surface 20d and two sides T2, T3 extending from both ends of the one side T1 toward the inside of the ferrule housing 20 and meeting at an intermediate position between the two adjacent ferrule receiving holes 23A, 23B inside the ferrule housing 20.

The length of the one side T1 of the triangular shape is set such that both end portions of the one side T1 overlap the ferrule receiving holes 23A, 23B. The dimensions of the triangular shape are set such that a vertex portion 261a at which the other two sides T2, T3 meet is near the housing interior region S1 between the adjacent ferrule receiving holes 23A, 23B or overlaps the housing interior region S1.

Further, according to the embodiment, as shown in Fig. 6, the flexible arm 261 is provided eccentrically toward the side of the small-diameter ferrule receiving hole 23B. The axis J1 shown in Fig. 6 is the central axis of the flexible arm 261, by which the width dimension of the flexible arm 261 is equally divided. The axis J1 of the flexible arm 261 is arranged eccentrically toward the side of the small-diameter ferrule receiving hole 23B.

The connector 30 is, for example, a connector to be mounted on a circuit board, and inside which optical circuit terminals to be connected to the ferrules 10A, 10B are provided.

The housing receiving portion 31 of the connector 30 receives the distal end portion 21 of the ferrule housing 20 such that the ferrules 10A, 10B held inside the ferrule housing 20 are connected to the optical circuit terminals incorporated in the connector 30.

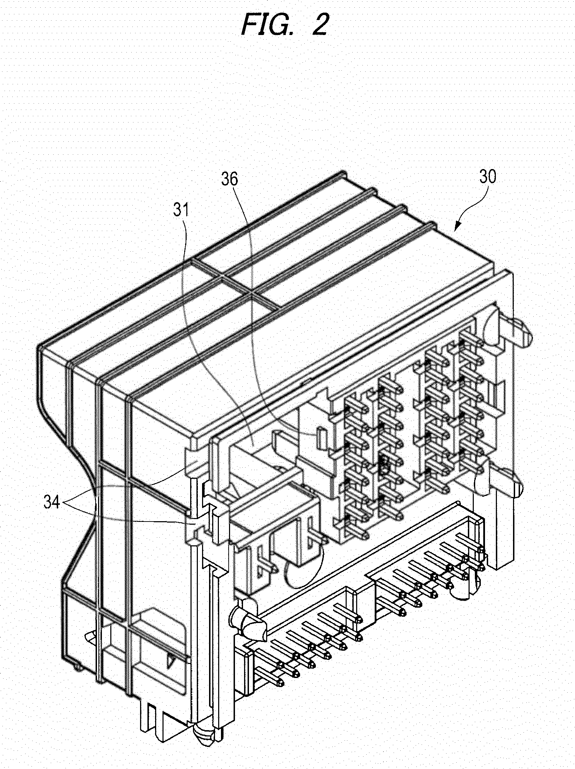

The housing receiving portion 31 in the embodiment includes a chamfered pivot portion 33 formed in a corner portion at a distal end of one inner side surface 31c, an engaging recess 34 arranged on the one inner side surface 31c, and a housing locking portion 36 (see Fig. 2) formed on an opposite inner side surface 31d as shown in Fig. 1.

The one inner side surface 31c in the housing receiving portion 31 is a surface that faces the one outer side surface 20c of the ferrule housing 20 accommodated in the housing receiving portion 31. Also, the opposite inner side surface 31d in the housing receiving portion 31 is a surface that faces the opposite outer side surface 20d of the ferrule housing 20 accommodated in the housing receiving portion 31.

According to the embodiment, as shown in Fig. 1, the chamfered pivot portion 33 is an inclined surface configured such that the corner portion at the distal end of the one inner side surface 31c is chamfered, but may be formed as a rounded surface.

According to the embodiment, as shown in Fig. 1, a chamfer 207 is formed also on a corner portion at a distal end of the opposite inner side surface 31d. This chamfer 207 is provided to avoid contacting a corner portion at a distal end of the opposite outer side surface 20d of the ferrule housing 20 during the attachment or detachment of the ferrule housing 20 with respect to the housing receiving portion 31. Here, according to the embodiment, as shown in Fig. 5, the relatively large chamfers 201, 202, 203 are formed on the corner portions at the distal end at of the opposite outer side surface 20d. Therefore, the chamfer 207 of the corner portion at the distal end of the opposite inner side surface 31d is formed as a small chamfer like light-chamfering.

The engaging recess 34 is a recess with which the engaging protrusion 24 of the ferrule housing 20 is engageable. The engaging recess 34 is provided in a recessed manner and is located on the one inner side surface 31c at a distance inwardly from the distal end. The engaging recesses 34 are installed in two places in correspondence with arrangement of the engaging protrusions 24 in the ferrule housing 20 as shown in Fig. 2.

The housing locking portion 36 is a protrusion for locking the connector engaging portion 262, and is formed on the opposite inner side surface 31d.

In the housing connection structure of the embodiment described above, coupling of the distal end portion 21 of the ferrule housing 20 to the housing receiving portion 31 of the connector 30 is performed in the following manner. That is, firstly, as shown in Fig. 1, the one outer side surface 20c of the ferrule housing 20 is brought into contact with the chamfered pivot portion 33 of the housing receiving portion 31 in an inclined manner. Next, the ferrule housing 20 is pivoted in the direction M2 shown in Fig. 1 about the chamfered pivot portion 33 serving as a fulcrum so that the one outer side surface 20c of the ferrule housing 20 overlies the one inner side surface 31c of the housing receiving portion 31, the engaging protrusion 24 of the ferrule housing 20 is engaged with the engaging recess 34 of the housing receiving portion 31, and the connector engaging portion 262 of the lock arm 26 is locked at the housing locking portion 36 of the housing receiving portion 31, whereby the distal end portion 21 of the ferrule housing 20 is coupled to the housing receiving portion 31.

When the connector engaging portion 262 of the lock arm 26 is locked at the housing locking portion 36 of the housing receiving portion 31, the flexible arm 261 of the lock arm 26 is flexibly deformed, and a load acting on a slide part between the ferrule housing 20 and the housing receiving portion 31 is decreased to a predetermined value or less.

When the ferrule housing 20 is detached from the housing receiving portion 31, the ferrule housing 20 is turned and operated in a direction opposite to that at the time of attachment.

According to the housing connection structure of the embodiment described above, the ferrule urging spring 25 for urging the ferrules 10A, 10B in the direction protruding from the distal end surface 20a of the housing of the ferrule housing 20 is attached to the base end portion 22 of the ferrule housing 20, thereby allowing the opposite outer side surface 20d of the ferrule housing 20 to be equipped with the lock arm 26 having the connector engaging portion 262 in the distal side outer surface of the flexible arm 261 extending in the direction from the base end side toward the distal end side of the ferrule housing 20.

The pivot point at the time of attaching or detaching the ferrule housing 20 with respect to the housing receiving portion 31 is on the chamfered pivot portion 33 formed by chamfering the corner portion at the distal end of the one inner side surface 31c of the housing receiving portion 31, and a slide region of the one outer side surface 20c of the ferrule housing 20 is formed in a smooth curved surface or an angled portion having a large angle of 90° or more. Consequently, stress concentration relieved at the location of the pivot point (the chamfered pivot portion 33).

Further, the distal end portion 21 of the ferrule housing 20 is coupled to the housing receiving portion 31 such that, from a state in which the one outer side surface 20c of the ferrule housing 20 is in contact with the chamfered pivot portion 33 of the housing receiving portion 31 in an inclined manner, the ferrule housing 20 is pivoted about the chamfered pivot portion 33 serving as a fulcrum so that the one outer side surface 20c overlies the one inner side surface 31c, the engaging protrusion 24 of the one outer side surface 20c of the ferrule housing 20 is engaged with the engaging recess 34 of the one inner side surface 31c of the housing receiving portion 31, and the connector engaging portion 262 of the opposite outer side surface 20d of the ferrule housing 20 is locked at the housing locking portion 36 on the opposite inner side surface 31d of the housing receiving portion 31. At the time of this coupling, the connector engaging portion 262 of the ferrule housing 20 engaged with the housing locking portion 36 of the housing receiving portion 31 is installed in the distal end of the flexible arm 261 constructing the lock arm 26 described above, and flexible displacement of the flexible arm 261 can avoid an excessive load acting at the time of the coupling.

Also, when the ferrule housing 20 coupled to the housing receiving portion 31 is detached from the housing receiving portion 31, the ferrule housing 20 is turned and operated in the direction opposite to that at the time of coupling, and also in that case, flexible displacement of the flexible arm 261 of the lock arm 26 can reduce a load acting on the slide part.

That is, the load acting on the mutual slide parts can be reduced at the time of operation of attachment and detachment of the ferrule housing 20 to and from the housing receiving portion 31. As a result, even in the case of repeating pivoting operation of the ferrule housing 20 attached to and detached from the housing receiving portion 31 of the connector 30, wear of the portion sliding at the time of the turning operation is prevented, and a deterioration of alignment of the ferrules 10A, 10B and a deterioration of coupling strength between the ferrule housing 20 and the housing receiving portion 31 can be prevented.

Also, according to the housing connection structure of the embodiment described above, the chamfers 201, 202, 203, 207 are formed on the distal end portion of the flexible arm 261 and the distal end portion of the opposite outer side surface 20d of the ferrule housing 20 and also on the corner portion at the distal end of the opposite inner side surface 31d to avoid an interfering contact during pivoting of the ferrule housing 20. Therefore, during the pivoting operation of the ferrule housing 20, there is no sudden increase in force required for the operation due to, for example, a contact between the distal end portion of the opposite outer side surface 20d of the ferrule housing 20 and the corner portion at the distal end of the opposite inner side surface 31d, so that the ferrule housing 20 can be attached and detached with stable operation force, and the attachment and detachment operations of the ferrule housing 20 are improved accordingly.

Also, according to the housing connection structure of the embodiment described above, the transverse cross-section of the flexible arm 261 of the lock arm 26 has a shape similar to a substantially triangular transverse cross-section region surrounded by the opposite outer side surface 20d and outer peripheral surfaces of the two adjacent ferrule receiving holes 23A, 23B, and as compared with, for example, a case in which the transverse cross-section of the flexible arm 261 has a rectangular shape, a dimension in a direction of flexural displacement can be increased to enhance spring strength. Also, because the region between the two adjacent ferrule receiving holes 23A, 23B is effectively utilized as a region for arranging the lock arm 26, the lock arm 26 is prevented from outwardly protruding from the opposite outer side surface 20d, and the external dimension between the one outer side surface 20c and the opposite outer side surface 20d of the ferrule housing 20 can be reduced.

Further, according to the housing connection structure of the embodiment described above, the ferrule receiving holes 23A, 23B adjacently arranged with the flexible arm 261 sandwiched have different inner diameters and thereby, wrong assembly of the ferrules 10A, 10B can be prevented. Further, the flexible arm 261 is arranged eccentrically toward the side of the small-diameter ferrule receiving hole 23B, so that distances between the flexible arm 261 and the respective ferrule receiving holes 23A, 23B can be equalized, and variations in coupling strength between the mutual ferrules 10A, 10B due to a difference in the distances to the flexible arm 261 can be prevented.

The invention is not limited to the embodiment described above, and changes, modifications and the like can be made as appropriate. In addition, as long as the present invention can be achieved, materials, shapes, dimensions, the number of components, arrangement locations, and the like of each of the components in the embodiment described above are optional and not limited.

For example, in the embodiment described above, in order to avoid an interfering contact during the pivoting of the ferrule housing 20, the chamfers are formed on the distal end portion of the flexible arm 261 and the distal end portion of the opposite outer side surface 20d and also on the corner portion at the distal end of the opposite inner side surface 31d. However, for the purpose of avoiding a interfering contact, the chamfer may be provided on at least the distal end portions of the flexible arm 261 and the opposite outer side surface 20d or the corner portion at the distal end of the opposite inner side surface 31d.

The present application is based on Japanese Patent Application No. 2012-252417 filed on November 16, 2012.

### Industrial Applicability

According to a housing connection structure according to the invention, even in the case of repeating turning operation of a ferrule housing attached to and detached from a housing receiving portion of a connector, wear of a portion sliding at the time of the turning operation is prevented, and a deterioration of alignment of ferrules and a deterioration of coupling strength between the ferrule housing and the housing receiving portion can be prevented.

### Description of Reference Signs

10A, 10B ferrules
20 ferrule housing
20a distal end surface of housing
20c one outer side surface
20d opposite outer side surface
21 distal end portion
22 base end portion
23A, 23B ferrule receiving holes
24 engaging protrusion
25 ferrule urging spring
26 lock arm
30 connector
31 housing receiving portion
31c one inner side surface
31d opposite inner side surface
33 chamfered pivot portion
34 engaging recess
36 housing locking portion
101 optical fiber cable
201,202,203,207 chamfer
261 flexible arm
262 connector engaging portion
T1,T2,T3 sides of triangular shape

## Claims

1. A housing connection structure comprising a ferrule housing (20) having a distal end portion (21) and a housing receiving portion (31) of a connector (30), wherein the distal end portion (21) of the ferrule housing (20) is detachably coupled to the housing receiving portion (31), the ferrule housing (20) accommodating and supporting a plurality of ferrules (10A, 10B) to which terminals of optical fiber cables (101) are attached such that distal ends of the ferrules (10A, 10B) protrude from a distal end surface (20a) of the ferrule housing (20), and the connector incorporating optical circuit terminals to be connected to the ferrules (10A, 10B),
wherein the ferrule housing (20) comprises:
an engaging protrusion (24) provided to protrude from a distal end portion of one outer side surface (20c) of the ferrule housing (20) in an outward direction perpendicular to the one outer side surface (20c);
a ferrule urging spring (25) attached to a base end portion (22) of the ferrule housing (20) to urge the ferrules (10A, 10B) in a direction protruding from the distal end surface (20a) of the ferrule housing (20); and
a lock arm (26) provided on an opposite outer side surface (20d) on a side opposite to the one outer side surface (20c), the lock arm (26) having a flexible arm (261) extending in a direction from a base end side of the ferrule housing (20) toward a distal end side of the ferrule housing (20) and a connector engaging portion (262) provided on a distal side outer surface of the flexible arm (261) and being a recess,
wherein the housing receiving portion (31) comprises;
a chamfered pivot portion (33) configured such that a corner portion at a distal end of one inner side surface (31c) of the housing receiving portion (31) that faces the one outer side surface (20c) is chamfered;
an engaging recess (34) configured in a recessed manner and located on the one inner side surface (31c) at a distance inwardly from the distal end so that the engaging protrusion (24) is engageable with the engaging recess (34); and
a housing locking portion (36) being a protrusion for locking the connector engaging portion (262) and being provided on an opposite inner side surface (31d) that faces the opposite outer side surface (20d) to lock the connector engaging portion (262), and
wherein the distal end portion (21) of the ferrule housing (20) is coupled to the housing receiving portion (31) such that, from a state in which the one outer side surface (20c) of the ferrule housing (20) is in contact with the chamfered pivot portion (33) of the housing receiving portion (31) in an inclined manner, the ferrule housing (20) is pivoted about the chamfered pivot portion (33) serving as a fulcrum so that the one outer side surface (20c) overlies the one inner side surface (31c), the engaging protrusion (24) is engaged with the engaging recess (34), and the connector engaging portion (262) is locked at the housing locking portion (36).

2. The housing connection structure according to claim 1, wherein a chamfer (201, 202, 203, 207) is provided on at least distal end portions of the opposite outer side surface (20d) and the flexible arm (261) or a corner portion at a distal end of the opposite inner side surface (31d) to avoid an interfering contact during pivoting of the ferrule housing (20).

3. The housing connection structure according to claim 1 or 2, wherein a transverse cross-section of the flexible arm (261) has a substantially triangular shape, one side (T1) of the triangular shape being parallel to the opposite outer side surface (20d), and two sides (T2, T3) of the triangular shape extending from both ends of the one side toward an inside of the ferrule housing (20) meet at an intermediate position between two adjacent ferrule receiving holes (23A, 23B) inside the ferrule housing (20).

4. The housing connection structure according to claim 3, wherein the adjacently arranged ferrule receiving holes (23A, 23B) between which the flexible arm (261) is interposed have different inner diameters, and the flexible arm (261) is provided eccentrically toward a side of the ferrule receiving hole (23B) having a smaller diameter.

## Patentansprüche

1. Gehäuseverbindungsstruktur mit einem Hülsengehäuse (20) mit einem distalen Endbereich (21) und einem Gehäuseaufnahmebereich (31) eines Verbinders (30), wobei der distale Endbereich (21) des Hülsengehäuses (20) lösbar mit dem Gehäuseaufnahmebereich (31) gekoppelt ist, wobei das Hülsengehäuse (20) mehrere Hülsen (10A, 10B) aufnimmt und hält, an denen Anschlüsse optischer Faserkabeln (101) derart angebracht sind, dass distale Enden der Hülsen (10A, 10B) aus einer distalen Stirnfläche (20a) des Hülsengehäuses (20) hervorstehen, und der Verbinder optische Schaltungsanschlüsse enthält, die mit den Hülsen (10A, 10B) zu verbinden sind,
wobei das Hülsengehäuse (20) aufweist:
einen Eingriffsvorsprung (24), der so vorgesehen ist, dass er aus einem distalen Endbereich einer Außenseitenfläche (20c) des Hülsengehäuses (20) in einer Auswärtsrichtung senkrecht zu der einen Außenseitenfläche (20c) hervorsteht;
eine Hülsenspannfeder (25), die an einem Basisendbereich (22) des Hülsengehäuses (20) so angebracht ist, dass die Hülsen (10A, 10B) in einer Richtung gedrückt werden, in der sie aus der distalen Stirnfläche (20a) des Hülsengehäuses (20) hervorstehen; und
einen Verriegelungsarm (26), der auf einer gegenüberliegenden Außenseitenfläche (20d) auf einer Seite gegenüberliegend zu der einen Außenseitenfläche (20c) vorgesehen ist, wobei der Verriegelungsarm (26) einen flexiblen Arm (26) hat, der sich in einer Richtung ausgehend von der Seite eines Basisendes des Hülsengehäuses (20) zur Seite eines distalen Endes des Hülsengehäuses (20) erstreckt, und wobei ein Verbindereingriffsbereich (262) auf einer distalen Seite einer Außenfläche des flexiblen Arms (261) vorgesehen ist und eine Vertiefung darstellt,
wobei der Gehäuseaufnahmebereich (31) aufweist:
einen angeschrägten Schwenkbereich (33), der so ausgebildet ist, dass ein Eckenbereich an einem distalen Ende einer Innenseitenfläche (31c) des Gehäuseaufnahmebereichs (31), der der einen Außenseitenfläche (20c) zugewandt ist, abgeschrägt ist;
eine Eingriffsvertiefung (34), die in einer vertieften Weise ausgebildet und auf der einen Innenseitenfläche (31c) mit Abstand nach innen gerichtet von dem distalen Ende so angeordnet ist, dass der Eingriffsvorsprung (24) mit der Eingriffsvertiefung (34) in Eingriff bringbar ist; und
einen Gehäuseverriegelungsbereich (36), der ein Vorsprung zum Verriegeln des Verbindereingriffsbereichs (262) ist und auf einer gegenüberliegenden Innenseitenfläche (31d), die der gegenüberliegenden Außenseitenfläche (20d) zugewandt ist, so vorgesehen ist, dass der Verbindereingriffsbereich (262) verriegelt ist, und
wobei der distale Endbereich (21) des Hülsengehäuses (20) mit dem Gehäuseaufnahmebereich (31) derart gekoppelt ist, dass, wenn von einem Zustand, in welchem die eine Außenseitenfläche (20c) des Hülsengehäuses (20) mit dem abgeschrägten Schwenkbereich (33) des Gehäuseaufnahmebereichs (31) in geneigter Weise in Kontakt ist, das Hülsengehäuse (20) um den abgeschrägten Schwenkbereich (33), der als ein Drehpunkt dient, geschwenkt ist, so dass die eine Außenseitenfläche (20c) über der einen Innenseitenfläche (31c) liegt, der Eingriffsvorsprung (24) mit der Eingriffsvertiefung (34) im Eingriff ist und der Verbindereingriffsbereich (262) an dem Gehäuseverriegelungsbereich (36) verriegelt ist.

2. Gehäuseverbindungsstruktur nach Anspruch 1, wobei eine Fase (201, 202, 203, 207) auf zumindest distalen Endbereichen der gegenüberliegenden Außenseitenfläche (20d) und dem flexiblen Arm (261) oder einem Eckenbereich an einem distalen Ende der gegenüberliegenden Innenseitenfläche (31d) zur Vermeidung eines behindernden Kontakts während des Schwenkens des Hülsengehäuses (20) vorgesehen ist.

3. Gehäuseverbindungsstruktur nach Anspruch 1 oder 2, wobei ein querverlaufender Querschnitt des flexiblen Arms (261) eine im Wesentlichen dreieckige Form hat, wobei eine Seite (T1) der dreieckigen Form parallel zu der gegenüberliegenden Außenseitenfläche (20d) ist, und wobei zwei Seiten (T2, T3) der dreieckigen Form, die sich von beiden Enden der einen Seite in Richtung zu einer Innenseite des Hülsengehäuses (20) erstrecken, auf eine Zwischenposition zwischen zwei benachbarten Hülsenaufnahmebohrungen (23A, 23B) im Inneren des Hülsengehäuses (20) treffen.

4. Gehäuseverbindungsstruktur nach Anspruch 3, wobei die benachbart angeordneten Hülsenaufnahmebohrungen (23A, 23B), zwischen denen der flexible Arm (261) angeordnet ist, unterschiedliche Innendurchmesser haben, und der flexible Arm (261) außermittig in Richtung zu einer Seite der Hülsenaufnahmebohrung (23B), die einen kleineren Durchmesser hat, vorgesehen ist.

## Revendications

1. Structure de connexion de logement comprenant un logement de virole (20) ayant une partie d'extrémité distale (21) et une partie de réception de logement (31) d'un connecteur (30), dans lequel la partie d'extrémité distale (21) du logement de virole (20) est couplée de façon détachable à la partie de réception de logement (31), le logement de virole (20) recevant et supportant une pluralité de viroles (10A, 10B) auxquelles des bornes de câbles de fibres optiques (101) sont fixées de sorte que les extrémités distales des viroles (10A, 10B) font saillie depuis une surface d'extrémité distale (20a) du logement de virole (20), et le connecteur incorporant des bornes de circuit optique à connecter aux viroles (10A, 10B),
dans lequel le logement de virole (20) comprend:
une saillie d'engagement (24) prévue pour faire saillie depuis une partie d'extrémité distale d'une surface latérale extérieure (20c) du logement de virole (20) dans une direction extérieure perpendiculaire à la surface latérale extérieure (20c);
un ressort de poussée de virole (25) fixé à une partie d'extrémité de base (22) du logement de virole (20) pour pousser les viroles (10A, 10B) dans une direction dépassant de la surface d'extrémité distale (20a) du logement de virole (20); et
un bras de verrouillage (26) disposé sur une surface latérale extérieure opposée (20d) d'un côté opposé à la surface latérale extérieure (20c), le bras de verrouillage (26) ayant un bras flexible (261) s'étendant dans une direction partant du côté d'extrémité du logement de virole (20) vers un côté d'extrémité distale du logement de virole (20) et une partie d'engagement de connecteur (262) prévue sur une surface externe de côté distale du bras flexible (261) et constituant un évidement,
dans lequel la partie de réception de logement (31) comprend:
une partie de pivot chanfreinée (33) configurée de sorte qu'une partie de coin à une extrémité distale d'une surface latérale intérieure (31c) de la partie de réception de logement (31) qui fait face à la surface latérale extérieure (20c) est chanfreinée;
un évidement d'engagement (34) configuré de manière évidée et situé sur la surface latérale intérieure (31c) à une distance vers l'intérieur de l'extrémité distale, de sorte que la saillie d'engagement (24) puisse s'engager dans l'évidement d'engagement (34); et
une partie de verrouillage de logement (36) étant une saillie pour verrouiller la partie d'engagement de connecteur (262) et étant prévue sur une surface latérale opposée (31d) qui fait face à la surface latérale extérieure opposée (20d) pour verrouiller la partie d'engagement de connecteur (262), et
dans lequel la partie d'extrémité distale (21) du logement de virole (20) est couplée à la partie de réception de logement (31) de telle sorte qu'à partir d'un état dans lequel la surface latérale externe (20c) du logement de virole (20) est en contact avec la partie de pivot chanfreinée (33) de la partie de réception de logement (31) de manière inclinée, le logement de virole (20) étant pivoté autour de la partie de pivot chanfreinée (33) servant de point d'appui de sorte que la surface latérale extérieure 20c) recouvre la surface latérale intérieure (31c), la saillie d'engagement (24) est en prise avec la cavité d'engagement (34), et la partie d'engagement de connecteur (262) est verrouillée au niveau de la partie de verrouillage de logement (36).

2. Structure de connexion de logement selon la revendication 1, dans laquelle un chanfrein (201, 202, 203, 207) est prévu sur au moins des parties d'extrémité distale de la surface latérale extérieure opposée (20d) et
le bras flexible (261) ou une partie d'angle à une extrémité distale de la surface latérale interne opposée (31d) pour éviter un contact perturbateur lors du pivotement du logement de virole (20).

3. Structure de connexion de logement selon les revendications 1 ou 2, dans laquelle une section transversale du bras flexible (261) a une forme sensiblement triangulaire, un côté (T1) de la forme triangulaire parallèle à la surface latérale opposée (20d), et deux côtés (T2, T3) de la forme triangulaire s'étendant des deux extrémités d'un côté vers un intérieur de la virole de logement (20) se rencontre dans une position intermédiaire entre deux trous de réception de virole adjacents (23A, 23B) à l'intérieur du logement de virole (20).

4. Structure de connexion de logement selon la revendication 3, dans laquelle les trous de réception de virole adjacents (23A, 23B) entre lesquels est interposé le bras flexible (261) ont différents diamètres intérieurs, et le bras flexible (261) est excentré vers un côté du trou de réception de la virole (23B) ayant un diamètre plus petit.
